# EUROPÄISCHE PATENTANMELDUNG

(11) **EP 4 068 602 A1**
(43) Veröffentlichungstag der Anmeldung: **05.10.2022**
(21) Anmeldenummer: 21166038.6
(22) Anmeldetag: 30.03.2021
(51) Int. Cl.: H02M 1/32, H02M 7/493, H02M 1/15, H02H 9/02

(54) **KONDENSATORVORRICHTUNG, UMRICHTERMODUL MIT KONDENSATORVORRICHTUNG, UMRICHTERSYSTEM MIT UMRICHTERMODUL UND AUSTAUSCHVERFAHREN FÜR UMRICHTERSYSTEM**

(71) Anmelder: Siemens Aktiengesellschaft, 80333 München (DE)
(72) Erfinder: Namyslo, Lutz, 91353 Hausen (DE); Weis, Benno, 91334 Hemhofen (DE)

(57) **Zusammenfassung**

Die Erfindung betrifft eine Kondensatorvorrichtung (1) für ein Umrichtermodul (3), aufweisend einen Zwischenkreiskondensator (4), einen Widerstand (5) zur Begrenzung eines Rippelstroms eines Gleichspannungszwischenkreises (2) des Umrichtermoduls (3) und ein elektrisches Schaltelement (6), wobei der Widerstand (5) und der Zwischenkreiskondensator (4) als eine Reihenschaltung ausgebildet sind, die Reihenschaltung zwischen einer ersten und zweiten Phase (7,8) des Gleichspannungszwischenkreises (2) verschaltbar ist, das elektrische Schaltelement (6) parallel zum Widerstand (5) verschaltet ist und der Widerstand (5) mittels des elektrischen Schaltelements (6) elektrisch überbrückbar ist. Die Erfindung betrifft weiterhin ein Umrichtermodul (3) mit der Kondensatorvorrichtung (1), ein Umrichtersystem (10) mit dem Umrichtermodul (3) und ein Austauschverfahren (23) für das Umrichtersystem (10).

## Beschreibung

Die Erfindung betrifft eine Kondensatorvorrichtung, ein Umrichtermodul mit der Kondensatorvorrichtung, ein Umrichtersystem mit dem Umrichtermodul für einen Parallelbetrieb von Umrichtermodulen und ein Austauschverfahren für das Umrichtersystem.

Elektrische Umrichter in Umrichtersystemen - sowie elektrische Umrichter selbst - unterliegen in der Antriebstechnik aber auch der Energieverteilung immer flexibler gestalteten Anforderungen. Dies ergibt sich aus einem höheren Automatisierungsgrad in der Industrie aber auch in der Energieerzeugung und Energieverteilung.

Damit steigt auch der Bedarf an einem höheren Modularisierungsgrad für den Einsatz dieser Umrichter. Insbesondere bei Frequenzumrichtern mit Gleichspannungszwischenkreis, wie z.B. der Siemens-Produktreihe SINAMICS S120 Booksize, können mehrere Umrichtermodule ein Umrichtersystem bilden und an einem gemeinsamen Gleichspannungszwischenkreis betrieben werden.

Eine typische Ausbildung derartiger Frequenzumrichter beginnt mit der Einspeisung der elektrischen Energie aus einem elektrischen Energieversorgungsnetz in einen Gleichrichter, welcher aus einer meist dreiphasigen Wechselspannung eine zweiphasige Gleichspannung für eine gemeinsame Gleichspannungsversorgung erzeugt.

An dieser gemeinsamen Gleichspannungsversorgung können mehrere Wechselrichter über einen eigenen Gleichspannungszwischenkreis elektrisch parallel betrieben werden, welche jeweils aus der zweiphasigen Gleichspannung eine oftmals dreiphasige Wechselspannung erzeugen.

Mittels dieser Wechselspannungen können dann beispielsweise elektrische Maschinen der Antriebstechnik aber auch andere Verbraucher via einer entsprechenden Energieverteilung an dem so erzeugten jeweiligen Wechselspannungsnetz betrieben werden.

In der Regel ist in jedem dieser Gleichspannungszwischenkreise der jeweiligen Umrichtermodule, eventuell auch in der Gleichspannungsversorgung, ein Zwischenkreiskondensator zwischen den beiden Gleichspannungsphasen verschaltet. Grundsätzlich hat ein Zwischenkreiskondensator in diesem elektrotechnischen Kontext die Aufgabe verschiedene elektrische Spannungsebenen bzw. elektrische Netze auf der gemeinsamen Gleichspannungsebene zu verkoppeln. So werden beispielsweise Spannungsspitzen durch den Zwischenkreiskondensator aufgenommen aber auch Spannungseinbrüche am Gleichspannungszwischenkreis gepuffert.

Grundsätzlich wirken Spannungsänderungen an einem oder mehreren der Gleichspannungszwischenkreis einzelner Umrichtermodule auf alle, parallel an der Gleichspannungsversorgung verschalteten Umrichtermodule und ihre Gleichspannungszwischenkreise identisch.

Die Folge dieser Spannungsänderungen ist ein Rippelstrom, der in den Gleichspannungszwischenkreisen eines jeden der parallel verschalteten Umrichtermodule fließt. Als Rippelstrom wird ein Wechselstrom beliebiger Frequenz und Kurvenform bezeichnet, welcher einen Gleichstrom überlagert. Dabei kann es auch zu Polarisationswechsel kommen.

Die der Gleichspannung überlagerte Wechselspannung erzeugt in den beteiligten Zwischenkreiskondensatoren Lade- und Entladevorgänge. Diese Lade- und Entladevorgänge wiederum bewirken einen Effektivstrom als Rippelstrom, welcher durch den äquivalenten Serienwiderstand (ESR) des jeweiligen Zwischenkreiskondensators eine Verlustleistung erzeugt, die in Verlustwärme umgesetzt wird und den jeweiligen Zwischenkreiskondensator erwärmt. Die Erwärmung der Zwischenkreiskondensatoren bewirkt eine Reduzierung von deren Lebensdauer, was die Ausfallsicherheit bzw. die Einsatzbereitschaft nicht nur der Kondensatoren selbst beeinflusst, sondern auch die des Umrichtermoduls und darüber hinaus des Umrichtersystems gefährdet.

Ein weiterer unerwünschter Nebeneffekt ist die Erzeugung elektromagnetischer Wechselfelder, die das Verhalten der elektromagnetischen Verträglichkeit (EMV) einer elektrischen Schaltung negativ beeinflussen.

Kondensatoren neuester Bauart besitzen die Eigenschaft, geringere elektrische Verluste zu erzeugen als Kondensatoren älterer Bauart, was hauptsächlich auch durch einen geringeren Widerstandswert des äquivalentem Serienwiderstand der neueren Kondensatoren gegenüber den älteren Kondensatoren hervorgerufen wird.

Geringere elektrische Verluste zu erzeugen, entspricht einer grundsätzlichen Anforderung an die meisten elektrischen und elektronischen Bauelemente. Wird nun jedoch ein Umrichtermodul mit einem Zwischenkreiskondensator neuer Bauart parallel zu einem oder mehreren Umrichtermodulen mit jeweils einem Zwischenkreiskondensator älterer Bauart verschaltet und an der gemeinsamen Gleichspannungsversorgung eines Umrichtersystems betrieben, so besteht in der Regel das Problem, dass der Rippelstrom in dem Umrichtermodul am Zwischenkreiskondensatoren neuerer Bauart höher ist als in dem oder den Umrichtermodulen an den Zwischenkreiskondensatoren älterer Bauart.

Da der gesamte Spannungsrippel am Gleichspannungszwischenkreis von der Mehrheit der Umrichtermodule bestimmt wird, kann ein Umrichtermodul mit Zwischenkreiskondensatoren neuerer Bauart durch den Rippelstrom überlastet oder sogar zerstört werden, wenn es in einem Umrichtersystem von Umrichtermodulen mit Zwischenkreiskondensatoren älterer Bauart betrieben wird.

Eine typische Anwendung hierfür ist der Ersatzteilfall, bei dem ein defektes oder aufgrund geänderter technischer Anforderungen auszutauschendes Umrichtermodul mit einem Zwischenkreiskondensator älterer Bauart durch ein neues Umrichtermodul als Ersatz-Umrichtermodul mit einem Zwischenkreiskondensator neuer Bauart ausgetauscht werden soll. Das Ersatz-Umrichtermodul ist somit nicht kompatibel zu den bisher verwendeten Umrichtermodulen.

Bisher wird das Problem dadurch gelöst, dass beim Innovieren eines bestehenden Umrichtersystems Umrichtermodule mit Zwischenkreiskondensatoren neuester Bauart nicht eingesetzt werden bzw. nicht zum Einsatz kommen können. Dadurch werden Vorteile, welche sich grundsätzlich durch eine neue Generation von Umrichtermodulen in Kombination mit älteren Umrichtermodulen ergeben könnten, wie z.B. die Verbesserung der Kompaktheit der Aufbautechnik und die Erhöhung der Lebensdauer der neuen Umrichtermodule, für das Umrichtersystem nicht realisiert. Nur wenn alle parallel an der Gleichspannungsversorgung betriebenen älteren Umrichtermodule gegen neuste Umrichtermodule ausgetauscht werden, ergeben sich die genannten Vorteile inklusive einer Reduzierung der elektrischen Verluste mittels der neusten Zwischenkreiskondensatoren.

Jedoch ist es dem Betreiber von Umrichtersystemen oftmals schwer vermittelbar, dass ein Defekt eines einzelnen Umrichtermoduls den Austausch aller Umrichtermodule nach sich ziehen sollte, um auch nur einen Teil der beschriebenen Vorteile für ein technisch verbessertes Umrichtersystem zu erhalten.

Der Erfindung liegt die Aufgabe zugrunde, eine Kondensatorvorrichtung, ein Umrichtermodul mit der Kondensatorvorrichtung, ein Umrichtersystem mit dem Umrichtermodul und ein Austauschverfahren für das Umrichtersystem vorzuschlagen, welche einen Betrieb von an einer gemeinsamen Gleichspannungsversorgung elektrisch parallel verschalteten Zwischenkreiskondensatoren gegenüber dem Stand der Technik verbessern können.

Die Aufgabe wird durch eine Kondensatorvorrichtung mit den in Anspruch 1 angegebenen Merkmalen, durch ein Umrichtermodul mit den in Anspruch 10 angegebenen Merkmalen, durch ein Umrichtersystem mit den in Anspruch 11 angegebenen Merkmalen und mit einem Austauschverfahren mit den in Anspruch 14 angegebenen Merkmalen gelöst.

Für die Lösung der Aufgabe wird eine Kondensatorvorrichtung für ein Umrichtermodul vorgeschlagen, welche einen Zwischenkreiskondensator, einen Widerstand zur Begrenzung eines Rippelstroms eines Gleichspannungszwischenkreises des Umrichtermoduls und ein elektrisches Schaltelement aufweist, wobei der Widerstand und der Zwischenkreiskondensator als eine Reihenschaltung ausgebildet sind, die Reihenschaltung zwischen einer ersten und zweiten Phase des Gleichspannungszwischenkreises verschaltbar ist, das elektrische Schaltelement parallel zum Widerstand verschaltet ist und der Widerstand mittels des elektrischen Schaltelements elektrisch überbrückbar ist.

Ein Kondensator neuster Bauart hat gegenüber einem Kondensator älterer Bauart meist den Vorteil, dass der Widerstandswert des äquivalenten Serienwiderstands des Kondensators neuerer Bauart im Allgemeinen kleiner ist als der Widerstandswert des äquivalenten Serienwiderstands des Kondensators älterer Bauart. Der Kondensator neuerer Bauart erzeugt demnach - bei sonst vergleichbaren elektrischen Kenndaten beider Kondensatoren - geringere elektrische Verluste als der Kondensator älterer Bauart. Geringere elektrische Verluste, und somit eine Verringerung von Verlustwärme, erhöhen in der Regel die Lebensdauer von Kondensatoren deutlich.

Ein Parallelbetrieb von beispielsweise zwei als Zwischenkreiskondensatoren ausgebildeten Kondensatoren mit unterschiedlichen äquivalenten Serienwiderständen an einer gemeinsamen Gleichspannungsversorgung erzeugt jedoch einen gemeinsamen Rippelstrom, welcher denjenigen Zwischenkreiskondensator elektrisch überlasten kann, welcher den kleineren Widerstandswert der beiden äquivalenten Serienwiderständen aufweist.

Mittels der Kondensatorvorrichtung kann das Umrichtermodul in einer vorteilhaften Weise ausgerüstet werden, den Zwischenkreiskondensator mit dem kleineren äquivalenten Serienwiderstand um den Widerstand aus der Reihenschaltung von Zwischenkreiskondensator und Widerstand zu ergänzen, und somit einen Gesamtwiderstand der Reihenschaltung zu erhöhen, indem eine Summe der Widerstandswerte des äquivalenten Serienwiderstands und des Widerstands gebildet wird, solang die elektrische Überbrückung des Widerstands nicht aktiviert ist.

Eine Differenz zwischen den äquivalenten Serienwiderständen der beispielhaft genannten beiden Zwischenkreiskondensatoren kann somit durch den Widerstand ausgeglichen werden, wobei der Rippelstrom beim Parallelbetrieb der beiden Zwischenkreiskondensatoren verringert oder vollständig verhindert werden kann.

Weisen beide hier exemplarisch betrachteten Zwischenkreiskondensatoren jedoch einen zumindest annähernd gleichen äquivalenten Serienwiderstand auf, wird beim Parallelbetrieb der Zwischenkreiskondensatoren kein oder ein nur geringer Rippelstrom erzeugt, es bedarf keines Ausgleichs der Widerstandswerte der beiden äquivalenten Serienwiderstände und der Widerstand der Reihenschaltung aus Widerstand und Zwischenkreiskondensator der Kondensatorvorrichtung kann mittels des elektrischen Schaltelements elektrisch überbrückt und entsprechend elektrisch deaktiviert werden.

Vorteilhafte Ausgestaltungsformen der Kondensatorvorrichtung sind in den abhängigen Ansprüchen angegeben.

Bei einer ersten vorteilhaften Ausgestaltungsform der Kondensatorvorrichtung ist eine Aktivierung oder Deaktivierung der elektrischen Überbrückung des Widerstands am elektrischen Schaltelement voreingestellt, ohne dass eine weitere Einstellaktivität für einen ersten elektrischen Betrieb der Kondensatorvorrichtung vorgesehen ist.

Sind die Widerstandswerte der äquivalenten Serienwiderstände von parallel zu verschaltenden Zwischenkreiskondensatoren beispielsweise einem Anwender bereits vor dem Einbau im Zuge einer Bestellung der Kondensatorvorrichtung als z.B. Ersatzteil bekannt, kann er die Kondensatorvorrichtung mit oder ohne Überbrückung des Widerstandes vorkonfiguriert bestellen und - in vorteilhaft ohne weitere Einstellaktivität - anwenden.

Bei einer weiteren vorteilhaften Ausgestaltungsform der Kondensatorvorrichtung weist der Widerstand einen Widerstandswert auf, welcher bis zu 100mΩ beträgt, und der Widerstand einen Leistungswert auf, welcher bis zu 1% der Bemessungsleistung des Umrichtermoduls beträgt.

Sowohl aus Sicht des Widerstandswerts wie auch aus Sicht des Leistungswerts kann der Widerstand in vorteilhafter Weise ausreichend dimensioniert werden, um die Widerstandsdifferenz von z.B. zwei äquivalenten Serienwiderständen zweier parallel betreibbarer Zwischenkreiskondensatoren auszugleichen und den Rippelstrom zu verringern oder vollständig zu verhindern.

Bei einer weiteren vorteilhaften Ausgestaltungsform der Kondensatorvorrichtung ist das elektrische Schaltelement ein Halbleiterschalter.

Der Halbleiterschalter als elektrisches Schaltelement ist beispielsweise dann in vorteilhafter Weise für den Einsatz in der Kondensatorvorrichtung geeignet, wenn ein geringer Einbauraum vorgesehen ist. Die Ansteuerung des Halbleiterschalters kann durch eine Prozessorsteuerung erfolgen, welche z.B. beim Einsatz der Kondensatorvorrichtung in dem Umrichtermodul oftmals bereits vorhanden ist.

Bei einer weiteren vorteilhaften Ausgestaltungsform der Kondensatorvorrichtung weist der Halbleiterschalter eine Sperrspannung von bis zu 100V auf.

Der Halbleiterschalter muss somit bzgl. seiner Sperrspannung in vorteilhafter Weise nicht auf die Gleichspannung des Gleichspannungszwischenkreises ausgelegt werden, welche über 600V betragen kann.

Bei einer weiteren vorteilhaften Ausgestaltungsform der Kondensatorvorrichtung beträgt die Sperrspannung des Halbleiterschalters 10% der Spannung des Gleichspannungszwischenkreises beträgt.

Unter der Bedingung, dass der Halbleiterschalter eine Sperrspannung von bis zu 100V aufweisen kann, ist für den Einsatz des Halbleiterschalters der Kondensatorvorrichtung für das Umrichtermodul eine maximale Gleichspannung von 1kV am Gleichspannungszwischenkreis des Umrichtermoduls möglich.

Bei einer weiteren vorteilhaften Ausgestaltungsform der Kondensatorvorrichtung weist das elektrische Schaltelement zum elektrischen Öffnen und Schließen seines ersten und zweiten elektrischen Schaltkontakts eine mechanische Schaltverbindung auf.

Das elektrische Schaltelement kann als ein Relais oder ein Schütz ausgebildet sein, deren bewährte Schalttechnologie auf Basis mechanischer Schaltverbindungen oftmals vorteilhaft zu einer langen Lebensdauer des elektrischen Schaltelements und somit der Kondensatorvorrichtung beitragen.

Bei einer weiteren vorteilhaften Ausgestaltungsform der Kondensatorvorrichtung ist die mechanische Schaltverbindung mittels eines Befestigungselements, insbesondere einer Schraube mit einer Gegenhaltung, sowohl mit dem ersten und zweiten elektrischen Schaltkontakt verbindbar wie auch von dem ersten und zweiten elektrischen Schaltkontakt lösbar.

Die Aktivierung oder Deaktivierung der elektrischen Überbrückung des Widerstands mittels des elektrischen Schaltelements wird meist nur einmal, beispielsweise während der Inbetriebnahme der Kondensatorvorrichtung für das Umrichtermodul, vorgenommen.

Die ersten und zweiten elektrischen Schaltkontakte können in einer einfachen Form über das Feststellen oder Lösen der mechanischen Schaltverbindung elektrisch verbunden oder getrennt werden, indem insbesondere die Schraube und die Gegenhaltung als Befestigungselement der mechanischen Schaltverbindung eingesetzt werden. Im geschlossenen Zustand der ersten und zweiten elektrischen Schaltkontakte mittels der mechanischen Schaltverbindung und des Befestigungselements aus Schraube und Gegenhaltung ist diese elektrische Verbindung in vorteilhafter Weise niederohmig und niederinduktiv sowie kostengünstig herstellbar.

Bei einer weiteren vorteilhaften Ausgestaltungsform der Kondensatorvorrichtung ist der Widerstand als diskretes Bauelement oder als Teil eines elektrischen Leiters, insbesondere als Teil einer Leiterbahn einer Leiterplatte, ausgebildet.

Ist der Widerstand Teil eines elektrischen Leiters, kann eine elektrische Ader oder eine Stromschiene den Widerstand ausbilden. Diese Ausbildung des Widerstands hat den Vorteil einer besonders platzsparenden und kostengünstigen Lösung.

Für die Lösung der Aufgabe wird weiterhin ein Umrichtermodul mit einem Gleichspannungszwischenkreis und der erfindungsgemäßen Kondensatorvorrichtung vorgeschlagen, wobei die Kondensatorvorrichtung mit dem Gleichspannungszwischenkreis des Umrichtermoduls verschaltet ist und der Gleichspannungszwischenkreis des Umrichtermoduls mit einer Gleichspannungsversorgung des Umrichtersystems verschaltbar ist.

Für die Lösung der Aufgabe wird ebenfalls ein Umrichtersystem für einen Parallelbetrieb von Umrichtermodulen vorgeschlagen, aufweisend eine Gleichspannungsversorgung, mindestens ein erfindungsgemäßes Umrichtermodul und mindestens ein weiteres Umrichtermodul mit einem weiteren Gleichspannungszwischenkreis, wobei ein weiterer Zwischenkreiskondensator zwischen einer dritten und vierten Phase des weiteren Gleichspannungszwischenkreises verschaltet ist und der Gleichspannungszwischenkreis und der weitere Gleichspannungszwischenkreis elektrisch parallel an der Gleichspannungsversorgung verschaltet sind.

Da dass Umrichtermodul die Kondensatorvorrichtung aufweist, kann der Zwischenkreiskondensator des Umrichtermoduls in vorteilhafter Weise mit dem weiteren Umrichtermodul über deren jeweilige Gleichspannungszwischenkreise parallel an der Gleichspannungsversorgung betrieben werden, unabhängig davon, ob deren jeweils äquivalente Serienwiderstände bzgl. ihres Widerstandswerts voneinander abweichen oder im Wesentlichen gleich sind. Es können also Zwischenkreiskondensatoren neuster Bauart und älterer Bauart elektrisch parallel verschaltet und miteinander betrieben werden, wobei im Betrieb des Umrichtersystems der Rippelstrom an den Zwischenkreiskondensatoren der Umrichtermodule verhindert oder insbesondere am Zwischenkreiskondensator des Umrichtermoduls - als ein Zwischenkreiskondensator neuster Bauart - auf ein akzeptables Maß reduziert wird.

Als noch akzeptabel kann ein Rippelstrom angenommen werden, welcher beim Parallelbetrieb eines Zwischenkreiskondensators neuster Bauart, dessen äquivalenter Serienwiderstand gegenüber dem äquivalenten Serienwiderstand eines älteren Zwischenkreiskondensators kleiner ist, einen elektrischen Verlust und damit eine Verlustwärme in dem Zwischenkreiskondensator neuster Bauart in einer Höhe erzeugt, ohne dessen meist vom Hersteller angegebene Lebensdauer zu reduzieren oder seine elektrische Funktion zu schädigen.

Bei einer ersten vorteilhaften Ausgestaltungsform des Umrichtersystems ist das elektrische Schaltelement der Kondensatorvorrichtung im Betrieb des Umrichtermoduls elektrisch geöffnet, wenn ein Widerstandswert eines ersten äquivalenten Serienwiderstands des Zwischenkreiskondensators der Kondensatorvorrichtung mindestens 50% kleiner als ein Widerstandswert eines zweiten äquivalenten Serienwiderstands des weiteren Zwischenkreiskondensators des weiteren Umrichtermoduls ist.

Der Widerstandswert des ersten äquivalenten Serienwiderstands des Zwischenkreiskondensators neuster Bauart der Kondensatorvorrichtung des Umrichtermoduls ist demnach deutlich kleiner als der Widerstandswert des zweiten äquivalenten Serienwiderstands des Zwischenkreiskondensators älterer Bauart des weiteren Umrichtermoduls. In diesem Fall ist der Rippelstrom im Betrieb des Umrichtersystems am Zwischenkreiskondensators neuster Bauart der Kondensatorvorrichtung des Umrichtermoduls derart hoch, dass die elektrischen Verluste und die damit einhergehende Verlustwärme zu einer vorzeitigen Alterung und ggf. auch zu funktionalen Einschränkungen dieses Zwischenkreiskondensators führen können. Dies verhindert die Kondensatorvorrichtung auf vorteilhafte Art und Weise, indem der Widerstand aktiviert ist.

Bei einer weiteren vorteilhaften Ausgestaltungsform des Umrichtersystems ist das elektrische Schaltelement der Kondensatorvorrichtung im Betrieb des Umrichtermoduls elektrisch geschlossen, wenn ein Widerstandswert eines ersten äquivalenten Serienwiderstands des Zwischenkreiskondensators der Kondensatorvorrichtung weniger als 50% von einem Widerstandswert eines zweiten äquivalenten Serienwiderstands des weiteren Zwischenkreiskondensators des weiteren Umrichtermoduls abweicht.

Da sich die äquivalenten Serienwiderstände der Zwischenkreiskondensatoren meist nicht exakt - also nicht zu 100% - gleichen, wird für den Parallelbetrieb der Zwischenkreiskondensatoren eine Toleranzabweichung von deren äquivalenten Serienwiderständen akzeptiert, wobei dann auch der auftretende Rippelstrom insbesondere am Zwischenkreiskondensator neuster Bauart des Umrichtermoduls akzeptiert wird, ohne jedoch zum Beispiel die meist vom Hersteller angegebene Lebensdauer dieses Zwischenkreiskondensator zu reduzieren oder seine elektrische Funktion zu schädigen.

Für die Lösung der Aufgabe wird auch ein Austauschverfahren für das erfindungsgemäße Umrichtersystem zum Austausch eines auszutauschenden Umrichtermoduls gegen das erfindungsgemäße Umrichtermodul als Ersatz-Umrichtermodul vorgeschlagen, wobei das Umrichtersystem vor dem Austausch ein auszutauschendes Umrichtermodul und das weitere Umrichtermodul und nach dem Austausch das weitere Umrichtermodul und das Umrichtermodul als Ersatz-Umrichtermodul aufweist, mit den Schritten
- Ermitteln der Widerstandswerte der äquivalenten Serienwiderstände der Zwischenkreiskondensatoren des weiteren Umrichtermoduls und des Umrichtermoduls als Ersatz-Umrichtermodul,
- Ausbau des auszutauschenden Umrichtermoduls und
- Einbau des Umrichtermoduls als Austauschmodul,
wobei das Umrichtermoduls als Austauschmodul das auszutauschende Umrichtermodul ersetzt.

Dieses Austauschverfahren berücksichtigt demnach in vorteilhafter Weise die äquivalenten Serienwiderstände von jedem der über deren Gleichspannungszwischenkreise an der Gleichspannungsversorgung des Umrichtersystems parallel betreibbaren Zwischenkreiskondensatoren.

Das auszutauschende Umrichtermodul, welches einen Zwischenkreiskondensator älterer Bauart aufweisen kann, wird somit ersetzt, da es beispielsweise neusten technischen Anforderung des Umrichtersystems nicht mehr genügt oder beispielsweise elektrische Bauelemente, wie der Zwischenkreiskondensator, defekt sind.

Der Anwender kann mittels des Austauschverfahrens Umrichtermodule mit Zwischenkreiskondensatoren neuster Bauart und älterer Bauart kombinieren, ohne im späteren Betrieb des Umrichtersystems durch das Auftreten eines unzulässig hohen Rippelstroms Zwischenkreiskondensatoren in ihrer Lebensdauer oder Funktion zu gefährden oder gar zu zerstören.

Bei einer vorteilhaften Ausgestaltungsform des Austauschverfahren weist das Austauschverfahren den Schritt Vergleich der jeweiligen Widerstandswerte der äquivalenten Serienwiderstände der Zwischenkreiskondensatoren des weiteren Umrichtermoduls und des Umrichtermoduls als Ersatz-Umrichtermodul und den Schritt Einstellung des elektrischen Schaltelements der Kondensatorvorrichtung auf, wobei bei der Einstellung
- mit dem Schritt Öffnen das elektrische Schaltelement elektrisch geöffnet wird, wenn der Widerstandswert des ersten äquivalenten Serienwiderstands des Zwischenkreiskondensators der Kondensatorvorrichtung des Umrichtermoduls mindestens 50% kleiner als der Widerstandswert des zweiten äquivalenten Serienwiderstands des weiteren Zwischenkreiskondensators des weiteren Umrichtermoduls beträgt oder
- mit dem Schritt Schließen das elektrische Schaltelement elektrisch geschlossen wird, wenn der Widerstandswert des ersten äquivalenten Serienwiderstands des Zwischenkreiskondensators der Kondensatorvorrichtung des Umrichtermoduls weniger als 50% von dem Widerstandswert des zweiten äquivalenten Serienwiderstands des weiteren Zwischenkreiskondensators des weiteren Umrichtermoduls beträgt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine schematische Darstellung eines elektrischen Ersatzschaltbild für einen Kondensator,
- FIG 2: eine erste schematische Darstellung einer erfindungsgemäßen Kondensatorvorrichtung, eines erfindungsgemäßen Umrichtermoduls mit der Kondensatorvorrichtung und eines erfindungsgemäßen Umrichtersystems mit dem Umrichtermodul,
- FIG 3: eine zweite schematische Darstellung der Kondensatorvorrichtung, des Umrichtermoduls mit der Kondensatorvorrichtung und des Umrichtersystems mit dem Umrichtermodul nach FIG 2,
- FIG 4: eine schematische Detaildarstellung als Schnittdarstellung des elektrischen Schaltelements der Kondensatorvorrichtung nach FIG 2 und
- FIG 5: ein Struktogramm eines erfindungsgemäßen Austauschverfahrens für das Umrichtersystem gemäß FIG 2 und FIG 3.

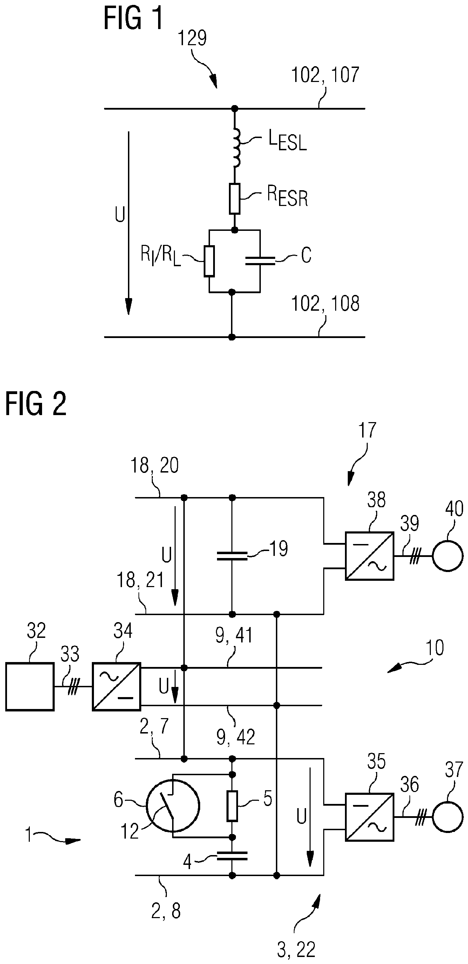

Die FIG 1 zeigt eine schematische Darstellung eines elektrischen Ersatzschaltbild 129 für einen Kondensator, welcher hier an einem Gleichspannungszwischenkreis 102 zwischen einer ersten und zweiten Phase (107,108) des Gleichspannungszwischenkreises 102 verschaltet ist und an dem eine Gleichspannung U anliegt.

Der Kondensator weist demnach laut seinem Ersatzschaltbild 129 eine Reihenschaltung aus einer äquivalenten Serieninduktivität L_{ESL}, einem äquivalenten Serienwiderstand R_{ESR} und einer den Kondensator kennzeichnenden Kapazität C auf.

Der äquivalente Serienwiderstand R_{ESR} bestimmt die ohmschen Anteile wie Anschlussdrähte, Kontaktwiderstände und die Plattenbeläge des Kondensators.

Die äquivalente Serieninduktivität L_{ESL} bestimmt die Induktivität beispielsweise in den elektrischen Leitungen bzw. Zuleitungen des Kondensators. Bei hohen Frequenzen kann sich diese Induktivität unangenehm bemerkbar machen, da im Resonanzfall der Kondensator zu einem LC-Schwingkreis wird.

Die Kapazität C ist im Ersatzschaltbild 129 parallel mit einem Widerstand R_{I}/R_{L} verbunden, welcher den Isolations- R_{I} bzw. den Leckwiderstand R_{L} des Kondensators abbildet. Der Isolationswiderstand R_{I} bezieht sich dabei auf das Dielektrikum des Kondensators und der Leckwiderstand R_{L} auf einen Reststrom bzw. Leckstrom, welcher z.B. bei Elektrolytkondensatoren fließen kann. Insbesondere der Leckwiderstand R_{L} verursacht eine Selbstentladung des aufgeladenen Kondensators.

Ein Rippelstrom, welcher beim parallelen Verschalten von mehreren Kondensatoren an dem Gleichspannungszwischenkreis 102 auftreten könnte (in FIG 1 nicht gezeigt), wird in seiner Höhe insbesondere durch die äquivalenten Serienwiderstände R_{ESR} der beteiligten Kondensatoren bestimmt.

In FIG 2 wird eine erste schematische Darstellung einer erfindungsgemäßen Kondensatorvorrichtung 1, eines erfindungsgemäßen Umrichtermoduls 3 mit der Kondensatorvorrichtung 1 und eines erfindungsgemäßen Umrichtersystems 10 mit dem Umrichtermodul 3 aufgezeigt.

Das Umrichtermodul 3 weist einen Gleichspannungszwischenkreis 2 mit einer ersten und zweiten Phase 7,8 und der Kondensatorvorrichtung 1 auf. Die Kondensatorvorrichtung 1 umfasst eine Reihenschaltung aus einem Widerstand 5 und einem Zwischenkreiskondensator 4 und ist zwischen der ersten und zweiten Phase 7,8 des Gleichspannungszwischenkreises 2 elektrisch verschaltet. An dem Widerstand 5 ist parallel zum Widerstand 5 ein von der Kondensatorvorrichtung 1 ebenfalls umfasstes elektrisches Schaltelement 6 mit einer mechanischen Schaltverbindung 12 verschaltet. Das elektrische Schaltelement 6 nach FIG 2 kann beispielsweise als Relais oder Schütz ausgebildet sein.

Der Gleichspannungszwischenkreis 2 ist mit einem ersten Wechselrichter 35 verbunden, welcher mittels einer zweiten Wechselspannungsleitung 36 (hier dreiphasig als Drehstromleitung) mit einer ersten elektrischen Maschine 37 verbunden ist.

Das Umrichtermodul 3 ist über seinen Gleichspannungszwischenkreis 2 mit einer Gleichspannungsversorgung 9 des Umrichtersystems 10 parallel verschaltet, indem die erste Phase 7 des Gleichspannungszwischenkreises 2 mit einer fünften Phase 41 der Gleichspannungsversorgung 9 und die zweite Phase 8 des Gleichspannungszwischenkreises 2 mit einer sechsten Phase 42 der Gleichspannungsversorgung 9 elektrisch verbunden ist.

Die Gleichspannungsversorgung 9 des Umrichtersystems 10 ist mit einem Gleichrichter 34 verbunden, welcher mittels einer ersten Wechselspannungsleitung (hier dreiphasig als Drehstromleitung) mit einem elektrischen Energieversorgungsnetz 32 verbunden ist.

Ein weiteres Umrichtermodul 17 weist einen weiteren Gleichspannungszwischenkreis 18 mit einer dritten und vierten Phase 20,21 und einem weiteren Zwischenkreiskondensator 19 auf.

Der weitere Gleichspannungszwischenkreis 18 ist mit einem zweiten Wechselrichter 38 verbunden, welcher mittels einer dritten Wechselspannungsleitung 39 (hier dreiphasig als Drehstromleitung) mit einer zweiten elektrischen Maschine 40 verbunden ist.

Das weitere Umrichtermodul 17 ist über seinen weiteren Gleichspannungszwischenkreis 18 mit der Gleichspannungsversorgung 9 des Umrichtersystems 10 - und somit auch mit dem Gleichspannungszwischenkreis 2 des Umrichtermoduls 3 - parallel verschaltet, indem die dritte Phase 20 des weiteren Gleichspannungszwischenkreises 18 mit der fünften Phase 41 der Gleichspannungsversorgung 9 und die vierte Phase 42 des weiteren Gleichspannungszwischenkreises 18 mit der sechsten Phase 42 der Gleichspannungsversorgung 9 elektrisch verbunden ist.

Mittels der elektrischen Energieversorgung (hier dreiphasiges Drehstromsystem) und der ersten Wechselspannungsleitung 33 wird über den Gleichrichter 34 und die Gleichspannungsversorgung 9 elektrische Energie in den Gleichspannungszwischenkreis 2 und den weiteren Gleichspannungszwischenkreis 18 eingespeist. Mittels der elektrischen Energie in den jeweiligen Gleichspannungszwischenkreisen 2,18 wird über den ersten Wechselrichter 35 am Gleichspannungszwischenkreis 2 und die zweite Wechselspannungsleitung 36 die erste elektrische Maschine 37 betrieben und über den zweiten Wechselrichter 38 am Gleichspannungszwischenkreis 18 und die dritte Wechselspannungsleitung 39 die zweite elektrische Maschine 40 betrieben

An der Gleichspannungsversorgung 9, dem Gleichspannungszwischenkreis 2 und dem weiteren Gleichspannungszwischenkreis 18 liegt eine Gleichspannung U an.

Das Umrichtermodul 3 ist hier als Ersatz-Umrichtermodul 22 - mit der Kondensatorvorrichtung 1 und dem Zwischenkreiskondensator 4 als Zwischenkreiskondensator 4 neuster Bauart - gegen ein auszutauschendes Umrichtermodul (in FIG 2 nicht explizit gezeigt) mit einem Zwischenkreiskondensator älterer Bauart ausgetauscht worden und ersetzt somit das auszutauschende Umrichtermodul.

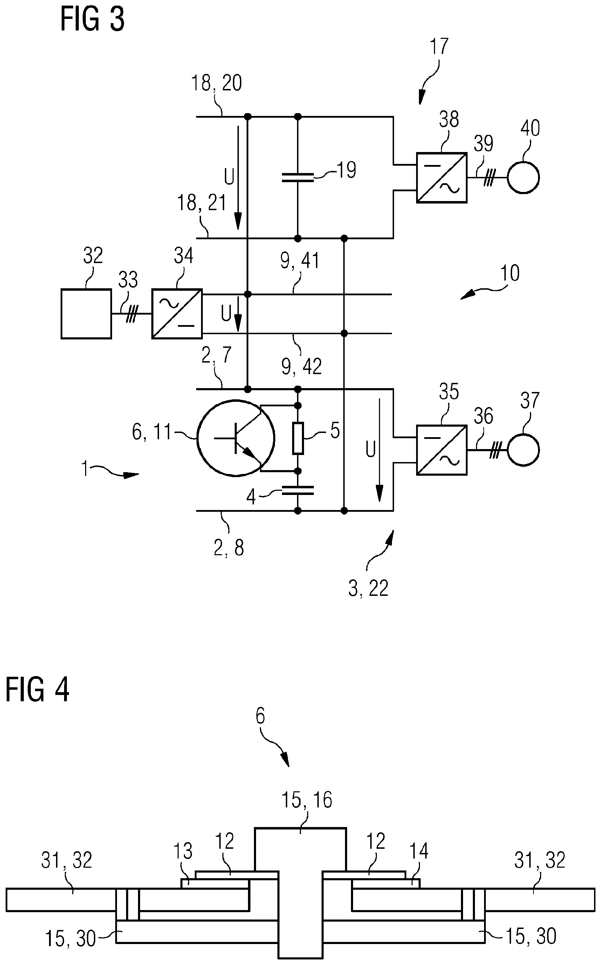

Mit einer zweiten schematischen Darstellung wird in FIG 3 die Kondensatorvorrichtung 1, das Umrichtermodul 3 mit der Kondensatorvorrichtung 1 und das Umrichtersystem 10 mit dem Umrichtermodul 3 nach FIG 2 aufgezeigt.

Diese zweite schematischen Darstellung der FIG 3 entspricht der ersten schematischen Darstellung aus FIG 2 in analoger Weise, mit dem Unterschied, dass das elektrische Schaltelement 6 ein Halbleiterschalter 11 ist. Typische Halbleiterschalter 11 sind beispielsweise als IGBT (Insulated Gate Bipolar Transistor) oder MOSFET (Metal Oxide Semiconductor Field-Effect Transistor) ausgebildet.

Die FIG 4 zeigt eine schematische Detaildarstellung als Schnittdarstellung des elektrischen Schaltelements 6 der Kondensatorvorrichtung 1 nach FIG 2.

Das elektrische Schaltelement 6 ist an einem als Leiterplatte 32 ausgebildeten Trägerelement 31 angeordnet. In dieser Ausbildungsform des elektrischen Schaltelements 6 sind ein erster und zweiter elektrischer Schaltkontakt 13,14 auf dem Trägerelement 31, hier der Leiterplatte 32, des elektrischen Schaltelements 6 über die mechanische Schaltverbindung 12 mittels eines Befestigungselements 15 in Form einer Schraube 16 und einer Gegenhaltung 30 für die Schraube 16 elektrisch und mechanisch miteinander verbunden. Somit ist das elektrische Schaltelement 6 elektrisch geschlossen.

Mittels der Schraube 16 und deren Gegenhaltung 30 als Befestigungselement 15 der mechanischen Schaltverbindung 12 kann die mechanische Schaltverbindung 12 von dem ersten und zweiten Schaltkontakt 13,14 auch gelöst werden (in FIG 4 nicht gezeigt), so dass das elektrische Schaltelement 6 dann elektrisch geöffnet ist.

Die Gegenhaltung 30 für die Schraube 16 kann fest mit dem Trägerelement 31, hier der Leiterplatte 32, verbunden sein. Dazu bietet sich beispielsweise eine Löt- oder Klebeverbindung an.

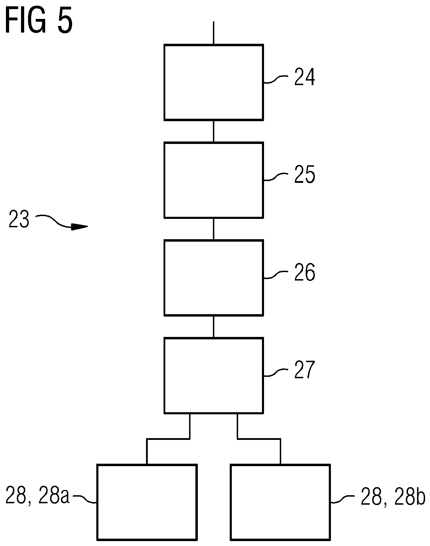

In der FIG 5 ist ein Struktogramm eines erfindungsgemäßen Austauschverfahrens 23 für das erfindungsgemäße Umrichtersystem gemäß FIG 2 und FIG 3 dargestellt.

Das Austauschverfahren 23 für das Umrichtersystem beinhaltet den Austausch eines auszutauschenden Umrichtermoduls gegen das Umrichtermodul als Ersatz-Umrichtermodul.

Dazu weist das Umrichtersystem vor dem Austausch ein auszutauschendes Umrichtermodul und das weitere Umrichtermodul und nach dem Austausch das weitere Umrichtermodul und das Umrichtermodul als Ersatz-Umrichtermodul auf.

Die folgenden Schritte werden mit dem Austauschverfahren 23 durchgeführt.

Im Schritt Ermitteln 24 werden die Widerstandswerte der äquivalenten Serienwiderstände der Zwischenkreiskondensatoren des weiteren Umrichtermoduls und des Umrichtermoduls als Ersatz-Umrichtermodul ermittelt.

Im Schritte Ausbau 25 wird das auszutauschende Umrichtermodul ausgebaut.

Im Schritt Einbau 26 wird das Umrichtermodul als Austauschmodul eingebaut, wobei das Umrichtermodul als Austauschmodul das auszutauschende Umrichtermodul ersetzt.

Im Schritt Vergleich 27 werden die jeweiligen Widerstandswerte der äquivalenten Serienwiderstände der Zwischenkreiskondensatoren des weiteren Umrichtermoduls und des Umrichtermoduls als Ersatz-Umrichtermodul miteinander verglichen.

Im Schritt Einstellung 28 wird das elektrische Schaltelement der Kondensatorvorrichtung eingestellt.

Bei der Einstellung 28 wird mit dem Schritt Öffnen 28a das elektrische Schaltelement elektrisch geöffnet, wenn der Widerstandswert des ersten äquivalenten Serienwiderstands des Zwischenkreiskondensators der Kondensatorvorrichtung des Umrichtermoduls mindestens 50% kleiner als der Widerstandswert des zweiten äquivalenten Serienwiderstands des weiteren Zwischenkreiskondensators (19) des weiteren Umrichtermoduls (17) ist.

Bei der Einstellung 28 wird mit dem Schritt Schließen 28b das elektrische Schaltelement elektrisch geschlossen, wenn der Widerstandswert des ersten äquivalenten Serienwiderstands des Zwischenkreiskondensators der Kondensatorvorrichtung des Umrichtermoduls weniger als 50% von dem Widerstandswert des zweiten äquivalenten Serienwiderstands des weiteren Zwischenkreiskondensators des weiteren Umrichtermoduls beträgt.

## Patentansprüche

1. Kondensatorvorrichtung (1) für ein Umrichtermodul (3), aufweisend
- einen Zwischenkreiskondensator (4),
- einen Widerstand (5) zur Begrenzung eines Rippelstroms an einem Gleichspannungszwischenkreis (2) des Umrichtermoduls (3) und
- ein elektrisches Schaltelement (6),
wobei
- der Widerstand (5) und der Zwischenkreiskondensator (4) als eine Reihenschaltung ausgebildet sind,
- die Reihenschaltung zwischen einer ersten und zweiten Phase (7,8) des Gleichspannungszwischenkreises (2) verschaltbar ist,
- das elektrische Schaltelement (6) parallel zum Widerstand (5) verschaltet ist und
- der Widerstand (5) mittels des elektrischen Schaltelements (6) elektrisch überbrückbar ist.

2. Kondensatorvorrichtung (1) nach Anspruch 1, wobei eine Aktivierung oder Deaktivierung der elektrischen Überbrückung des Widerstands (5) am elektrischen Schaltelement (6) voreingestellt ist, ohne dass eine weitere Einstellaktivität für einen ersten elektrischen Betrieb der Kondensatorvorrichtung (1) vorgesehen ist.

3. Kondensatorvorrichtung (1) nach einem der Ansprüche 1 oder 2, wobei der Widerstand (5) einen Widerstandswert aufweist, welcher bis zu 100mΩ beträgt, und der Widerstand (5) einen Leistungswert aufweist, welcher bis zu 1% der Bemessungsleistung des Umrichtermoduls (2) beträgt.

4. Kondensatorvorrichtung (1) nach einem der vorhergehenden Ansprüche, wobei das elektrische Schaltelement (6) ein Halbleiterschalter (11) ist.

5. Kondensatorvorrichtung (1) nach Anspruch 4, wobei der Halbleiterschalter (11) eine Sperrspannung von bis zu 100V aufweist.

6. Kondensatorvorrichtung (1) nach Anspruch 5, wobei die Sperrspannung des Halbleiterschalters (11) 10% der Spannung (U) des Gleichspannungszwischenkreises (2) beträgt.

7. Kondensatorvorrichtung (1) nach einem der Ansprüche 1 bis 3, wobei das elektrische Schaltelement (6) zum elektrischen Öffnen und Schließen seines ersten und zweiten elektrischen Schaltkontakts (13,14) eine mechanische Schaltverbindung (12) aufweist.

8. Kondensatorvorrichtung (1) nach Anspruch 7, wobei die mechanische Schaltverbindung (12) mittels eines Befestigungselements (15), insbesondere einer Schraube (16) mit einer Gegenhaltung (30), sowohl mit dem ersten und zweiten elektrischen Schaltkontakt (13,14) verbindbar wie auch von dem ersten und zweiten elektrischen Schaltkontakt (13,14) lösbar ist.

9. Kondensatorvorrichtung (1) nach einem der vorhergehenden Ansprüche, wobei der Widerstand (5) als diskretes Bauelement oder als Teil eines elektrischen Leiters, insbesondere als Teil einer Leiterbahn einer Leiterplatte, ausgebildet ist.

10. Umrichtermodul (3) mit einem Gleichspannungszwischenkreis (2) und einer Kondensatorvorrichtung (1) nach einem der Ansprüche 1 bis 9, wobei die Kondensatorvorrichtung (1) mit dem Gleichspannungszwischenkreis (2) des Umrichtermoduls (3) verschaltet ist und der Gleichspannungszwischenkreis (2) des Umrichtermoduls (3) mit einer Gleichspannungsversorgung (9) des Umrichtersystems (10) verschaltbar ist.

11. Umrichtersystem (10) für einen Parallelbetrieb von Umrichtermodulen (3,17), aufweisend
- eine Gleichspannungsversorgung (9),
- mindestens ein Umrichtermodul (3) nach Anspruch 10 und
- mindestens ein weiteres Umrichtermodul (17) mit einem weiteren Gleichspannungszwischenkreis (18), wobei
- ein weiterer Zwischenkreiskondensator (19) zwischen einer dritten und vierten Phase (20,21) des weiteren Gleichspannungszwischenkreises (18) verschaltet ist und
- der Gleichspannungszwischenkreis (2) und der weitere Gleichspannungszwischenkreis (18) elektrisch parallel an der Gleichspannungsversorgung (9) verschaltet sind.

12. Umrichtersystem (10) nach Anspruch 11, wobei das elektrische Schaltelement (6) der Kondensatorvorrichtung (1) im Betrieb des Umrichtermoduls (3) elektrisch geöffnet ist, wenn ein Widerstandswert eines ersten äquivalenten Serienwiderstands des Zwischenkreiskondensators (4) der Kondensatorvorrichtung (1) mindestens 50% kleiner als ein Widerstandswert eines zweiten äquivalenten Serienwiderstands des weiteren Zwischenkreiskondensators (19) des weiteren Umrichtermoduls (17) ist.

13. Umrichtersystem (10) nach Anspruch 11, wobei das elektrische Schaltelement (6) der Kondensatorvorrichtung (1) im Betrieb des Umrichtermoduls (2) elektrisch geschlossen ist, wenn ein Widerstandswert eines ersten äquivalenten Serienwiderstands des Zwischenkreiskondensators (4) der Kondensatorvorrichtung (1) weniger als 50% von einem Widerstandswert eines zweiten äquivalenten Serienwiderstands des weiteren Zwischenkreiskondensators (19) des weiteren Umrichtermoduls (17) abweicht.

14. Austauschverfahren (23) für ein Umrichtersystem (10) nach einem der Ansprüche 11 bis 13 zum Austausch eines auszutauschenden Umrichtermoduls gegen das Umrichtermodul (3) als Ersatz-Umrichtermodul (22), wobei das Umrichtersystem (10) vor dem Austausch ein auszutauschendes Umrichtermodul und das weitere Umrichtermodul (17) und nach dem Austausch das weitere Umrichtermodul (17) und das Umrichtermodul (3) als Ersatz-Umrichtermodul (22) aufweist, mit den Schritten
- Ermitteln (24) der Widerstandswerte der äquivalenten Serienwiderstände der Zwischenkreiskondensatoren (4,19) des weiteren Umrichtermoduls (17) und des Umrichtermoduls (3) als Ersatz-Umrichtermodul (22),
- Ausbau (25) des auszutauschenden Umrichtermoduls und
- Einbau (26) des Umrichtermoduls (3) als Austauschmodul (22), wobei das Umrichtermoduls (3) als Austauschmodul (22) das auszutauschende Umrichtermodul ersetzt.

15. Austauschverfahren (23) nach Anspruch 14, mit dem Schritt Vergleich (27) der jeweiligen Widerstandswerte der äquivalenten Serienwiderstände der Zwischenkreiskondensatoren (4,19) des weiteren Umrichtermoduls (17) und des Umrichtermoduls (3) als Ersatz-Umrichtermodul (22) und dem Schritt Einstellung (28) des elektrischen Schaltelements (6) der Kondensatorvorrichtung (1), wobei bei der Einstellung (28)
- mit dem Schritt Öffnen (28a) das elektrische Schaltelement (6) elektrisch geöffnet wird, wenn der Widerstandswert des ersten äquivalenten Serienwiderstands des Zwischenkreiskondensators (4) der Kondensatorvorrichtung (1) des Umrichtermoduls (3) mindestens 50% kleiner als der Widerstandswert des zweiten äquivalenten Serienwiderstands des weiteren Zwischenkreiskondensators (19) des weiteren Umrichtermoduls (17) ist oder
- mit dem Schritt Schließen (28b) das elektrische Schaltelement (6) elektrisch geschlossen wird, wenn der Widerstandswert des ersten äquivalenten Serienwiderstands des Zwischenkreiskondensators (4) der Kondensatorvorrichtung (1) des Umrichtermoduls (3) weniger als 50% von dem Widerstandswert des zweiten äquivalenten Serienwiderstands des weiteren Zwischenkreiskondensators (19) des weiteren Umrichtermoduls (17) beträgt.
